# EUROPÄISCHE PATENTSCHRIFT

(11) **EP 3 011 663 B1**
(45) Veröffentlichungstag und Bekanntmachung des Hinweises auf die Patenterteilung: **09.08.2017**
(21) Anmeldenummer: 14730121.2
(22) Anmeldetag: 05.06.2014
(51) Int. Cl.: H02K 1/27, H02K 1/32, H02K 5/128, H02K 1/30

(54) **PUMPE MIT WENIGSTENS EINEM STRÖMUNGSKANAL UND HAUSHALTSGERÄT MIT EINER SOLCHEN PUMPE**
PUMP HAVING AT LEAST ONE FLOW CHANNEL AND HOUSEHOLD APPLIANCE HAVING SUCH A PUMP
POMPE POURVUE D'AU MOINS UN CANAL D'ÉCOULEMENT ET APPAREIL MÉNAGER COMPRENANT UNE TELLE POMPE

(30) Priorität: 19.06.2013 DE 102013211574
(43) Veröffentlichungstag der Anmeldung: 27.04.2016
(73) Patentinhaber: BSH Hausgeräte GmbH, 81739 München (DE)
(72) Erfinder: HOFFMANN, Igor, 89407 Dillingen (DE); IVANAK, Martin, 04012 Kosice (SK); KALAVSKY, Michal, 04023 Kosice (SK); LUTZ, Stephan, 86637 Zusamaltheim (DE); PERTERMANN, Hans-Holger, 01259 Dresden (DE); STUMPF-SCHEMETOW, Sergej, 89407 Dillingen (DE)
(86) Internationale Anmeldenummer: PCT/EP2014/061729
(87) Internationale Veröffentlichungsnummer: WO 2014/202397

(56) Entgegenhaltungen:
- EP-A1- 0 778 649
- EP-A1- 1 427 087
- DE-A1- 10 051 239
- DE-B3-102011 079 224
- US-A- 4 080 112
- US-A- 4 414 523

## Beschreibung

Die Erfindung betrifft ein Haushaltsgerät, insbesondere Geschirrspülmaschine oder Waschmaschine, mit einer Pumpe.

Die EP 1 788 690 A1 beschreibt ein Verfahren zum Herstellen eines Permanentmagnetrotors für einen synchronen Motor, insbesondere für eine Pumpe einer Waschmaschine für industrielle und private Verwendung und dergleichen, mit einem externen Stator umfassend einen zylindrischen zentralen Kern mit einer Achse und einem axialen Durchgang, der von einer Vielzahl von Permanentmagneten umgeben ist, die eine äußere Bogenfläche und eine innere Bogenfläche und Seitenkanten aufweisen, umfassend die Schritte des Anordnens eines becherartigen Körpers aus einem Plastikmaterial umfassend ein Grund-Ende, ein offenes Ende, eine Seitenwand und eine Vielzahl von sich längserstreckenden Ausnehmungen, die in der Seitenwand ausgebildet sind und Platzierungsaufnahmen für eine Platzierung der Magnete definieren; Einbringen des zentralen Kerns in den becherartigen Körper und Anordnen der Magnete in Übereinstimmung mit den Platzierungsaufnahmen; Einspritzen eines Plastikmaterials in den becherartigen Körper und um diesen herum in Übereinstimmung mit den Ausnehmungen, wobei eine käfigartige Struktur mit gegenüberliegenden Böden und Streben, die sich zwischen den gegenüberliegenden Böden erstrecken, erhalten wird, wobei die gegenüberliegenden Böden an den Enden des becherartigen Körpers angrenzen und die Streben in den Ausnehmungen aufgenommen sind.

Die EP 1 427 087 A1 beschreibt einen Rotor für einen Elektromotor, an dessen beiden axialen Enden jeweils eine Abdeckscheibe angeordnet ist, wobei an einer Abdeckscheibe einstückig mit dieser eine Anlage für ein Axiallager ausgebildet ist und an der anderen Abdeckscheibe ein in axialer Richtung nach außen gerichteter Stoppring einstückig mit der Abdeckscheibe ausgebildet ist. Im Inneren des Rotors ist eine die Rotorwelle umgebende und die Abdeckscheiben miteinander verbindende Hülse vorgesehen. In der der kreiszylinderförmigen Außenmantelfläche der Rotorwelle zugewandten Innenmantelfläche der Hülse ist ein zur Außenmantelfläche der Rotorwelle hin offen ausgebildeter Entlüftungskanal in Form einer Längsnut oder Längsrille vorgesehen, welcher sich in axialer Richtung durch den Rotor erstreckt und zu den Außenseiten der Abdeckscheiben hin geöffnet ist. Ein solcher Entlüftungskanal kann bei nasslaufenden Elektromotoren dazu dienen, eine Entlüftung beispielsweise des dem Laufrad abgewandten Bereiches des Motorgehäuses zu erreichen.

Der nasslaufende Permanentmagnet- Rotor des Elektromotors der Kreiselpumpe der DE 100 51 239 A1 weist ein erstes Nabenteil mit einer Außen- Begrenzungsfläche auf, das von einem hohlen zweiten Nabenteil mit einer Innenbegrenzungsfläche umgeben ist. Die Außen- Begrenzungsfläche des ersten Nabenteils weist zur Innenbegrenzungsfläche des außen angeordneten zweiten Nabenteils geöffnete Formnuten auf. Insbesondere können die einander zugewandten Begrenzungsflächen beider Nabenteile einander zugeordnete, offene Strömungskanalkonturen aufweisen, die zusammen zumindest einen zwischen den beiden Nabenteilen verbleibenden, durchgehenden Strömungskanal bilden. Das erste Nabenteil besteht aus einem magnetisch leitenden Material, das zweite Nabenteil aus Permanentmagnetmaterial. Außen auf dem zweiten Nabenteil kann ein Ringmagnet befestigt sein.

Die Aufgabe der Erfindung ist es, ein Haushaltsgerät mit einer Pumpe zu schaffen, die kostengünstig ist und insbesondere eine verbesserte Lebensdauer und/oder einen verbesserten Wirkungsgrad aufweist.

Die Aufgabe der Erfindung wird gelöst durch ein Haushaltsgerät, insbesondere Geschirrspülmaschine oder Waschmaschine, mit einer Pumpe gemäß dem Anspruch 1. Diese erfindungsgemäße Pumpe weist einen Antriebsmotor mit einer elektrisch ansteuerbaren Statorwicklung und einem im Feld der Statorwicklung in einem Nassraum des Antriebsmotors drehantreibbar gelagerten Rotor auf. Der Rotor weist eine Motorwelle, einen als Permanentmagnet-Ring ausgebildeten Rotormagneten und einen Halter auf, der als einstückiges Kunststoffspritzgussteil auf der Motorwelle befestigt ist. An dem Halter ist der Rotormagnet gehalten. Der Halter umfasst einen sich zwischen der Motorwelle und dem Rotormagneten erstreckenden Hülsenabschnitt, der wenigstens einen Strömungskanal aufweist, der ausgebildet ist, in dem Nassraum befindliche Flüssigkeit durch den Halter zu transportieren. Erfindungsgemäß sitzt der Halter vollumfänglich auf der Motorwelle auf Der wenigstens eine Strömungskanal erstreckt sich in einem radialen Abstand zur Motorwelle vollständig im Inneren des Hülsenabschnitts. Dabei weist der wenigstens eine Strömungskanal eine umfänglich geschlossenwandige Kanalwand auf. Die geschlossenwandige Kanalwand wird vollständig aus dem Material des Hülsenabschnitts des im Kunststoffspritzgussverfahren gefertigten Halters gebildet.

Die im Nassraum befindliche Flüssigkeit dient unter anderem der Kühlung und/oder Schmierung des Rotors bzw. der Lager des Rotors. Um einen hohen elektromagnetischen Wirkungsgrad zu erreichen, wird die äußere Mantelwand des Rotors, d.h. des Rotormagneten konstruktiv möglichst nahe an die Statorwicklung herangeführt. Dies hat zur Folge, dass zwischen Rotor bzw. Rotormagnet und der Innenwand des Nassraums nur ein sehr geringer Spalt vorhanden ist, der insbesondere während einer Rotation des Rotors nur sehr schlecht von der Flüssigkeit durchströmt werden kann. Insoweit kann ein von einem Flüssigkeitszulauf abgewandter Nassraumbereich nur sehr schwer allein über diesen Spalt durchspült werden. Insbesondere kann in einem solchen hinteren, d.h. dem Pumpenrad abgewandten Nassraumbereich sich in unerwünschter Weise Luft- und/oder Dampfblasen ansammeln. Aufgrund der Rotation des Rotors sammeln sich tendenziell Luft- und/oder Dampfblasen im achsnahen Zentrum des Nassraumes nahe der Motorwelle und nicht in einem äußeren Umfang nahe des Spaltes. Mittels des wenigstens einen erfindungsgemäßen Strömungskanals kann die Flüssigkeit durch den Halter hindurch zirkulieren und insbesondere können Luft- und/oder Dampfblasen herausgeführt werden, so dass keine Gefahr besteht, dass die Lager des Rotors trockenlaufen, was die Lebensdauer der Pumpe und den Wirkungsgrad der Pumpe reduzieren würde. Durch ein Abführen von Luft- und/oder Dampfblasen läuft der Antriebsmotor und damit auch die Pumpe außerdem leiser.

Indem der wenigstens eine Strömungskanal sich in einem radialen Abstand zur Motorwelle vollständig im Inneren des Hülsenabschnitts erstreckt, kann keine Flüssigkeit die Motorwelle in dem Bereich benetzen, in dem der Halter auf der Motorwelle aufsitzt. Dadurch kann beispielsweise Korrosion in diesem Bereich verhindert oder zumindest reduziert werden. Eine Vermeidung von Korrosion ist ganz besonders in dem Bereich, in dem der Halter auf der Motorwelle aufsitzt wichtig, wenn dort zur besseren Fixierung des Halters auf der Motorwelle, die Motorwelle an ihrer Oberfläche eine Rändelung aufweist, welche die Motorwelle sowieso schwächt und anfällig für Korrosion macht. Dies ist besonders dann von Bedeutung, wenn es sich bei der Flüssigkeit beispielsweise um eine chemisch aktive Spülflotte einer Geschirrspülmaschine handelt. Wenn der wenigstens eine Strömungskanal sich in einem radialen Abstand zur Motorwelle vollständig im Inneren des Hülsenabschnitts erstreckt, kann außerdem der Halter vollumfänglich auf der Motorwelle aufsitzen, d.h. der Halter hat mit einer größtmöglichen Fläche Kontakt zur Mantelwand der Motorwelle, wodurch der Halter besonders fest und zuverlässig auf der Motorwelle festgelegt sein kann und insoweit ein unerwünschtes Lösen des Halters von der Motorwelle verhindert oder die Gefahr dazu zumindest deutlich verringert ist. Statt eines einzigen Strömungskanals können insbesondere zwei oder auch mehrere Strömungskanäle in dem Halter ausgebildet sein.

Die folgenden Merkmale können einzeln oder in Kombination zueinander in unterschiedlichen Ausführungsformen Anwendung finden: Generell kann es sich bei dem Antriebsmotor um einen bürstenlosen Gleichstrom-Nassläufer-Pumpenantriebsmotor handeln. Bei dem Rotormagneten kann es sich generell um einen Permanentmagnet-Ring handeln, der an dem Halter befestigt ist. Der wenigstens einen Strömungskanal kann ausgebildet sein, in dem Nassraum befindliche Flüssigkeit von einem ersten Stirnende des Halters zu einem axial gegenüberliegenden zweiten Stirnende des Halters zu transportieren. Der Hülsenabschnitt kann insbesondere eine innere Mantelwand aufweisen, welche die Motorwelle über ihren Umfang hinweg vollständig umschließt. Insoweit kann der Hülsenabschnitt an der Motorwelle vollumfänglich anliegen.

Der wenigstens eine Strömungskanal weist erfindungsgemäß eine umfänglich geschlossenwandige Kanalwand auf. Dabei wird die geschlossenwandige Kanalwand erfindungsgemäß vollständig aus dem Material des Hülsenabschnitts des im Kunststoffspritzverfahrens gefertigten Halters gebildet. Dadurch ist sichergestellt, dass Flüssigkeit durch den Strömungskanal leckagefrei transportiert werden kann. Insoweit besteht keine Notwendigkeit, eventuelle Spalte abzudichten. Es besteht damit auch keine Gefahr, dass aus dem Strömungskanal in unerwünschter Weise Flüssigkeit austreten kann, welche die Motorwelle in dem Bereich benetzen könnte, in dem der Halter auf der Motorwelle aufsitzt.

Die Wandstärke einer innerhalb des Umfangs des wenigstens einen Strömungskanals liegenden Hülsen-Innenwand des Hülsenabschnitts kann in einer speziellen Ausführungsform der Erfindung größer sein, als die Wandstärke einer außerhalb des Umfangs des wenigstens einen Strömungskanals liegenden Hülsen-Außenwand des Hülsenabschnitts. Mit anderen Worten teilt der Umfang, auf dem der wenigstens eine Strömungskanal liegt den Hülsenabschnitt in einen hülsenförmigen Außenwandabschnitt und einen ebenfalls hülsenförmigen Innenwandabschnitt. Der Innenwandabschnitt weist dabei eine größere Wandstärke auf, als der Außenwandabschnitt. Indem die Wandstärke der Hülsen-Innenwand größer ist als die Wandstärke der Hülsen-Außenwand, kann ein stabiler Sitz des Halters auf der Motorwelle gewährleistet sein. Indem die Wandstärke der Hülsen-Außenwand kleiner ist als die Wandstärke der Hülsen-Innenwand liegt der wenigstens eine Strömungskanal näher an dem Rotormagneten, der generell ein Permanentmagnet-Ring sein kann, so dass eine Kühlung des Rotormagneten bzw. des Permanentmagnet-Rings durch die durch den wenigstens einen Strömungskanal fließende Flüssigkeit verbessert sein kann.

In allen Ausführungen kann der wenigstens eine Strömungskanal zumindest austrittsseitig einen sich im Querschnitt erweiternden Strömungskanal-Endabschnitt aufweisen. Dabei kann beispielsweise ein im Querschnitt kreisförmiger Strömungskanal im Bereich des Strömungskanal-Endabschnitts in einen beispielsweise eher ovalen und/oder bogenförmigen Strömungskanal übergehen. Indem der wenigstens eine Strömungskanal zumindest austrittsseitig einen sich im Querschnitt erweiternden Strömungskanal-Endabschnitt aufweist, kann die austretende Flüssigkeit besser abgeführt werden und sich gegebenenfalls auch besser an dem Axiallager verteilen. Die Flüssigkeit kann zumindest überwiegend oder sogar vollständig durch eine zentrale Öffnung, insbesondere einen Ringspalt zwischen dem Axiallager und der Motorwelle hindurchtreten und über eines der weiteren Lager der Motorwelle zu dem Pumpenrad zurückgeführt werden.

Insoweit kann in allen Ausführungen der wenigstens eine Strömungskanal insbesondere austrittsseitig an einer Stirnwand eines am Halter ausgebildeten Lagersitzes münden, in dem ein Gleit- oder Wälzlager, insbesondere ein Axiallager gehalten ist, welches ausgebildet ist, den Rotor bezüglich der Statorwicklung drehbar zu lagern.

Der Lagersitz kann außerdem mehrere gleichmäßig über einen Umfang verteilte, zur Bildung von Strömungsdurchbrüchen voneinander beabstandete Vorsprünge aufweisen, die sich von der Stirnwand des Halters in axialer Richtung weg erstrecken. Der Lagersitz kann dabei in Art eines kronenförmigen Halters ausgeführt sein. Die Vorsprünge können abschnittsweise unter Bildung der Strömungsdurchbrüche aus einer umlaufenden kreisringförmigen Wand des Halters gebildet werden. Der Halter kann generell als ein insbesondere einstückiges Kunststoffspritzgussteil gefertigt sein.

Die Vorsprünge können dem Lager, insbesondere Axiallager zugewandte Innenflächen aufweisen, die zum linienberührenden Anliegen an dem Lager, insbesondere Axiallager eben ausgebildet sind. Insoweit können die Innenflächen der Vorsprünge einen polygonen Zug als Sitzfläche bilden, so dass ein kreisringförmiges Lager linienberührend an diesem polygonen Zug d.h. an den Innenflächen der Vorsprünge anliegt.

Generell kann der Hülsenabschnitt mehrere, sich axial längserstreckende, gleichmäßig über einen Umfang verteilte sacklochartige Ausnehmungen aufweisen. Diese Ausnehmungen können im Querschnitt eine kreisringsegmentförmige Kontur aufweisen. Die sacklochartigen Ausnehmungen können die Materialmenge und folglich das Gewicht des Halters reduzieren. Außerdem können im Fall eines im Kunststoffspritzgussverfahren gefertigten Halters Lunker und Einfallstellen verhindert oder zumindest vermieden werden, die sich beim Abkühlen und Schrumpfen des Kunststoffmaterials des Halters ergeben könnten. Darüber hinaus können die sacklochartigen Ausnehmungen in einer speziellen Ausführungsform die erfindungsgemäßen Strömungskanäle bilden oder zumindest mitbilden. Insoweit kann beispielsweise der wenigstens eine Strömungskanal, insbesondere können zwei oder mehrere Strömungskanäle durch jeweils eine Ausnehmung gebildet werden, deren die sacklochartige Ausnehmung bildende geschlossen Stirnwand eröffnet ausgebildet ist. Die geschlossen Stirnwand ist insoweit durch den sich im Querschnitt erweiternden Strömungskanal-Endabschnitt ersetzt.

In ergänzenden Ausführungsformen kann die Pumpe einen Gleichstrom-Pumpenantriebsmotor mit einer elektrisch ansteuerbaren Statorwicklung und einem im Feld der Statorwicklung drehantreibbar gelagerten Rotor aufweisen, der eine Motorwelle, einen Permanentmagnet-Ring und einen Halter aufweist, der auf der Motorwelle befestigt ist und an dem der Permanentmagnet-Ring gehalten ist, wobei die Pumpe eine Verdrehsicherung aufweist, die ausgebildet ist, den Permanentmagnet-Ring gegen ein Verdrehen um die Achse des Rotors auf dem Halter zu sichern.

Eine kostengünstige Pumpe kann dadurch geschaffen werden, dass der Rotor im Wesentlichen lediglich aus den Bauteilen der Motorwelle, des Halters und des Permanentmagnet-Rings gebildet wird. Der Halter dient im Wesentlichen dazu, den Permanentmagnet-Ring an der Motorwelle zu befestigen. Da der Permanentmagnet-Ring eine ringförmige Grundgestalt aufweist und der Permanentmagnet-Ring koaxial zur Motorwelle ausgerichtet an dem Halter festgelegt ist, besteht ganz allgemein die Gefahr, dass sich aufgrund der Drehung des im Betrieb der Pumpe angetriebenen Rotors der Permanentmagnet-Ring in Rotationsrichtung von dem Halter lösen kann und insoweit durchdrehen kann. Indem die Pumpe eine Verdrehsicherung aufweist, die ausgebildet ist, den Permanentmagnet-Ring gegen ein Verdrehen um die Achse des Rotors auf dem Halter zu sichern, kann ein unerwünschtes Lösen des Permanentmagnet-Rings von dem Halter verhindert werden.

Die Verdrehsicherung kann von wenigstens einem formschlüssig in jeweils wenigstens einen Sicherungsrücksprung eingreifenden Sicherungsvorsprung gebildet werden. Durch eine solche Paarung von Sicherungsrücksprung und Sicherungsvorsprung wird eine zusätzliche formschlüssige Verbindung von Permanentmagnet-Ring und Halter geschaffen, die insbesondere eine Verdrehen des Permanentmagnet-Rings auf dem Halter zuverlässig verhindern kann.

Der wenigstens eine Sicherungsrücksprung kann an dem Halter und der jeweils wenigstens eine zugeordnete Sicherungsvorsprung an dem Permanentmagnet-Ring angeordnet, insbesondere ausgebildet sein. Alternativ oder ergänzend kann der wenigstens eine Sicherungsrücksprung an dem Permanentmagnet-Ring und der jeweils wenigstens eine zugeordnete Sicherungsvorsprung an dem Halter angeordnet, insbesondere ausgebildet sein. Dadurch können der Halter und der Permanentmagnet-Ring formschlüssig ineinander greifen.

In allen Ausführungsformen können über einen Umfang in gleichmäßigen Abständen verteilt zwei, insbesondere drei oder mehrere Paare von Sicherungsrücksprüngen und Sicherungsvorsprüngen am Rotor ausgebildet sein. Indem über einen Umfang in gleichmäßigen Abständen verteilt zwei, insbesondere drei oder mehrere Paare von Sicherungsrücksprüngen und Sicherungsvorsprüngen am Rotor vorgesehen werden, kann der Permanentmagnet-Ring in mehreren verschiedenen Winkelstellungen auf dem Halter fixiert werden. Daneben können zwei, insbesondere drei oder mehrere Paare von Sicherungsrücksprüngen und Sicherungsvorsprüngen eine bessere formschlüssige Fixierung sicherstellen, als nur ein einziges Paar von Sicherungsrücksprung und Sicherungsvorsprung.

Der Halter kann zur Bildung einer trommelförmigen Aufnahme für den Permanentmagnet-Ring einen kreisringzylindrischen Hülsenabschnitt aufweisen, der fest mit der Motorwelle verbunden ist und an axial gegenüberliegenden Stirnseiten des Hülsenabschnitts können zwei den Permanentmagnet-Ring seitlich begrenzende Kreisscheiben angeordnet sein, von denen wenigstens eine Kreisscheibe eine dem Permanentmagnet-Ring zugewandte Kreisscheibenwand aufweist, welche den wenigstens einen Sicherungsrücksprung und/oder den wenigstens einen Sicherungsvorsprung aufweist. Der Permanentmagnet-Ring hingegen kann an wenigstens einer Ringstirnwand, die einer der Kreisscheiben des Halters zugewandt ist, den wenigstens einen korrespondierenden Sicherungsrücksprung und/oder den wenigstens einen korrespondierenden Sicherungsvorsprung aufweisen. Die Kreisscheiben des Halters begrenzen den Permanentmagnet-Ring von zwei axialen Stirnseiten und legen insoweit den Permanentmagnet-Ring zunächst nur in axialer Richtung fest. Ohne eine Verdrehsicherung ist der Permanentmagnet-Ring lediglich kraftschlüssig oder stoffschlüssig auf dem Halter gegen Verdrehen fixiert. Indem wenigstens eine Kreisscheibe eine dem Permanentmagnet-Ring zugewandte Kreisscheibenwand aufweist, welche den wenigstens einen Sicherungsrücksprung und/oder den wenigstens einen Sicherungsvorsprung aufweist, wird eine zusätzliche formschlüssig wirkende Befestigung geschaffen, welche insbesondere das Verdrehen des Permanentmagnet-Rings auf der trommelförmigen Aufnahme verhindert.

Der Sicherungsrücksprung kann von einer halblinsenförmigen Vertiefung in dem Permanentmagnet-Ring, insbesondere in einer Ringstirnwand des Permanentmagnet-Rings gebildet werden und der Sicherungsvorsprung kann von einem korrespondierenden halblinsenförmigen Vorsprung an dem Halter, insbesondere an einer dem Permanentmagnet-Ring zugewandten Kreisscheibenwand der wenigstens einen Kreisscheibe gebildet werden. Indem insbesondere der Permanentmagnet-Ring mit derartigen halblinsenförmigen Vertiefungen und/oder halblinsenförmigen Vorsprüngen versehen wird, können scharfe Kanten und/oder Ecken in der Oberfläche des Permanentmagnet-Rings vermieden werden. Da scharfe Kanten und/oder Ecken in der Oberfläche des Permanentmagnet-Rings Spannungsrisse verursachen oder zumindest begünstigen können, ist es besonders bei den im Allgemeinen eher spröden Werkstoffen, die für den Permanentmagnet-Ring verwendet werden können, sinnvoll Kanten und/oder Ecken zu vermeiden, um Spannungsrisse verhindern oder deren Auftreten vermeiden oder deren Verbreitung verzögern zu können. Dadurch lässt sich trotz Ausbildung von Vertiefungen und/oder Vorsprüngen an dem Permanentmagnet-Ring Ausschuss in der Herstellung verhindern bzw. reduzieren und die Lebensdauer des Permanentmagnet-Rings im Betrieb und folglich der gesamten Pumpe verlängern.

Der Rotor kann als ein Permanentmagnet-Innenrotor ausgebildet sein und von einem einteiligen Ring aus einem anisotropen ferromagnetischen Material gebildet werden, der mehrpolig magnetisiert ist.

Der Permanentmagnet-Ring kann derart mehrpolig magnetisiert sein, dass jedes Polpaar im Querschnitt des Permanentmagnet-Rings einen Kreisringsektor einnimmt, derart dass die magnetischen Feldlinien von der äußeren Mantelwand des Permanentmagnet-Ringes ausgehend sich radial nach innen erstrecken, innerhalb des jeweiligen Sektors nahe der inneren Mantelwand des Permanentmagnet-Ringes bogenförmig verlaufen und sich dann in Richtung der äußeren Mantelwand des Permanentmagnet-Ringes wieder radial nach außen erstrecken.

Der Permanentmagnet-Ring kann beispielsweise mit vier oder sechs Polpaaren magnetisiert sein, die in gleichgroßen Sektoren gleichmäßig über den Umfang des Ringes verteilt angeordnet sind.

Der Halter kann zur Bildung einer trommelförmigen Aufnahme für den Permanentmagnet-Ring einen kreisringzylindrischen Hülsenabschnitt aufweisen, der fest mit der Motorwelle verbunden ist und an axial gegenüberliegenden Stirnseiten des Hülsenabschnitts zwei Kreisscheiben angeordnet sind, die jeweils einen größeren Außendurchmesser aufweisen, als der Hülsenabschnitt und zwischen denen der Permanentmagnet-Ring befestigt ist.

In den Ausführungen, in denen der Halter Kreisscheiben aufweist kann wenigstens einer der Kreisscheiben einen Lagersitz aufweisen, in dem ein Gleit- oder Wälzlager, insbesondere Axiallager gehalten ist, welches ausgebildet ist, den Permanentmagnet-Innenrotor bezüglich der Statorwicklung drehbar zu lagern.

Der Lagersitz kann eine Bodenfläche aufweisen, deren dem Lager zugewandte Oberfläche sphärisch, insbesondere konkav-sphärisch ausgebildet ist.

Alternativ oder ergänzend zu einer sphärischen Bodenfläche kann der Lagersitz mehrere gleichmäßig über den Umfang eines Außenringes des Lagers verteilte, voneinander beabstandete Vorsprünge aufweisen, die sich von einer Außenwand wenigstens eines der Kreisscheiben in axialer Richtung weg erstrecken und deren dem Lager zugewandte Innenflächen zum linienberührenden Anliegen an dem Außenring des Lagers eben ausgebildet sind.

In allen Ausführungen kann der Permanentmagnet-Ring wenigstens ein, insbesondere drei oder mehrere Rastmittel aufweisen, die ausgebildet sind, in korrespondierende Gegenrastmittel einzugreifen, die an wenigstens einem der beiden Kreisscheiben des Halters ausgebildet sind, um in einer verrasteten Position den Permanentmagnet-Ring drehfest an dem Halter zu fixieren.

In allen Ausführungen kann der Permanentmagnet-Ring wenigstens eine, insbesondere drei oder mehrere Positionierkerben aufweisen, die ausgebildet sind, den Permanentmagnet-Ring während eines Magnetisiervorgangs in einer Magnetisiervorrichtung gegen Verdrehen gesichert zu halten.

Ganz allgemein kann der Gleichstrom-Pumpenantriebsmotor generell als ein von Flüssigkeit durchströmter Nassläufermotor ausgebildet sein und der Permanentmagnet-Ring des Permanentmagnet-Innenrotors dabei in unmittelbarem Kontakt zur Flüssigkeit stehen.

Die Erfindung betrifft außerdem ein Haushaltsgerät, insbesondere eine Geschirrspülmaschine oder eine Waschmaschine, die eine erfindungsgemäße Pumpe, wie beschrieben, aufweist.

Ein Ausführungsbeispiel der Erfindung ist exemplarisch in den beigefügten schematischen Zeichnungen dargestellt.

Es zeigen:
- Fig. 1: eine Querschnittsansicht einer beispielhaften Pumpe eines Haushaltsgeräts mit einem erfindungsgemäßen Gleichstrom-Nassläufer-Pumpenantriebsmotor,
- Fig. 2: eine perspektivische Explosionsdarstellung eines erfindungsgemäßen Permanentmagnet-Innenrotors des Gleichstrom-Nassläufer-Pumpenantriebsmotors gemäß Fig. 1;
- Fig. 3a: einen Längsschnitt entlang der Schnittlinie C-C gemäß Fig. 3b durch den Permanentmagnet-Innenrotor gemäß Fig. 2 in einem montierten Zustand;
- Fig. 3b: eine Draufsicht in axialer Richtung auf den Permanentmagnet-Innenrotor gemäß Fig. 3a;
- Fig. 3c: einen vergrößerten Ausschnitt aus der Fig. 3a im Bereich einer Verdrehsicherung;
- Fig. 4: eine Querschnittsansicht durch den Permanentmagnet-Innenrotor entlang der Schnittlinie B-B gemäß Fig. 3a;
- Fig. 5: eine vergrößerte Teilquerschnittsansicht der beispielhaften Pumpe im Bereich eines erfindungsgemäßen Halters des Permanentmagnet-Innenrotors gemäß Fig. 3a mit einer Darstellung von erfindungsgemäßen Strömungskanälen;
- Fig. 6a: eine Querschnittsansicht durch den Gleichstrom-Nassläufer-Pumpenantriebsmotor mit dem im Feld der Statorwicklung drehbar gelagerten Permanentmagnet-Innenrotor; und
- Fig. 6b: eine schematische Darstellung der magnetischen Feldlinien im Querschnitt durch den Gleichstrom-Nassläufer-Pumpenantriebsmotor mit dem im Feld der Statorwicklung drehbar gelagerten Permanentmagnet-Innenrotor gemäß Fig. 6a.

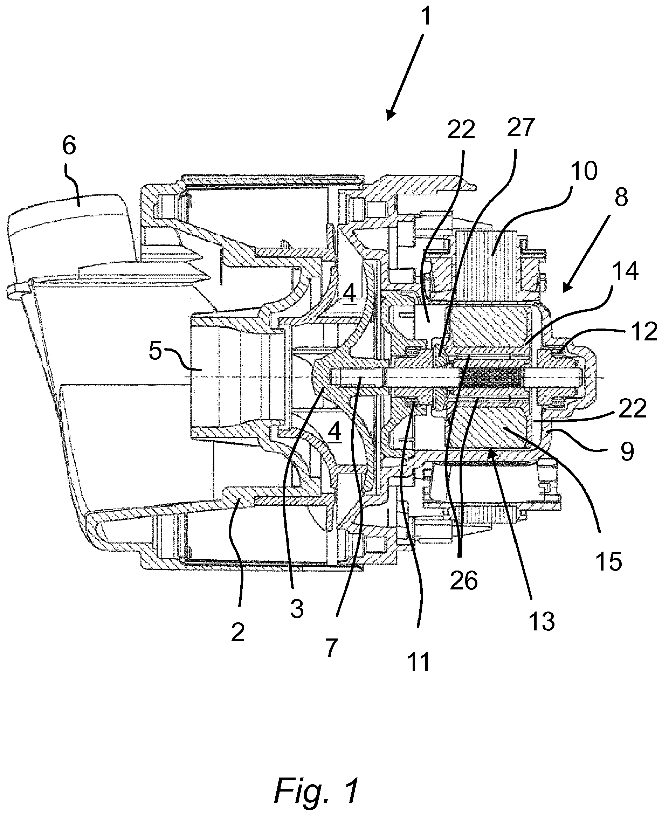

Eine in Fig. 1 beispielhaft dargestellte Pumpe 1 eines Haushaltsgeräts weist ein Pumpengehäuse 2 auf, in dem ein Pumpenrad 3 drehbar angeordnet ist. Das Pumpenrad 3 weist mehrere Schaufeln 4 auf, die ausgebildet und angeordnet sind Flüssigkeit über eine Eintrittsöffnung 5 axial anzusaugen und über eine Austrittsöffnung 6 radial auszustoßen. Im vorliegenden Ausführungsbeispiel bildet die Pumpe 1 folglich eine Kreiselpumpe in der Bauart einer Radialpumpe. Das Pumpenrad 3 sitzt drehfest auf einer Motorwelle 7 eines bürstenlosen Gleichstrom-Nassläufer-Pumpenantriebsmotor 8.

Der Gleichstrom-Nassläufer-Pumpenantriebsmotor 8 ist in einem Motorgehäuse 9 angeordnet. Das Motorgehäuse 9 ist im Falle des vorliegenden Ausführungsbeispiels unmittelbar mit dem Pumpengehäuse 2 verbunden. Gegebenenfalls kann das Motorgehäuse 9 zusammen mit dem Pumpengehäuse 2 eine Baueinheit bilden, oder sogar einteilig ausgebildet sein. Der Gleichstrom-Nassläufer-Pumpenantriebsmotor 8 weist einer elektrisch ansteuerbare Statorwicklung 10 und einen im Feld der Statorwicklung 10 antreibbaren und mittels der Motorwelle 7 im Feld zwischen zwei gegenüberliegenden Lagern 11, 12 drehbar gelagerten Rotor 13 auf.

Der Gleichstrom-Nassläufer-Pumpenantriebsmotor 8 des dargestellten Ausführungsbeispiels ist als ein von Flüssigkeit durchströmter Nassläufermotor ausgebildet, bei dem der Rotor 13 innerhalb eines Motorgehäuses 9 in einem Nassraum 22 gelagert ist, der von Flüssigkeit aus dem Pumpengehäuse 2 durchflutet ist. Die Statorwicklung 10 ist dabei in trockener Umgebung außerhalb des Motorgehäuses 9 angeordnet.

In dargestellten Ausführungsbeispiel weist der Rotor 13 im Wesentlichen die Motorwelle 7, einen auf der Motorwelle 7 drehfest befestigten Halter 14 und einen an dem Halter 14 drehfest und axial fixierten Permanentmagnet-Ring 15 auf.

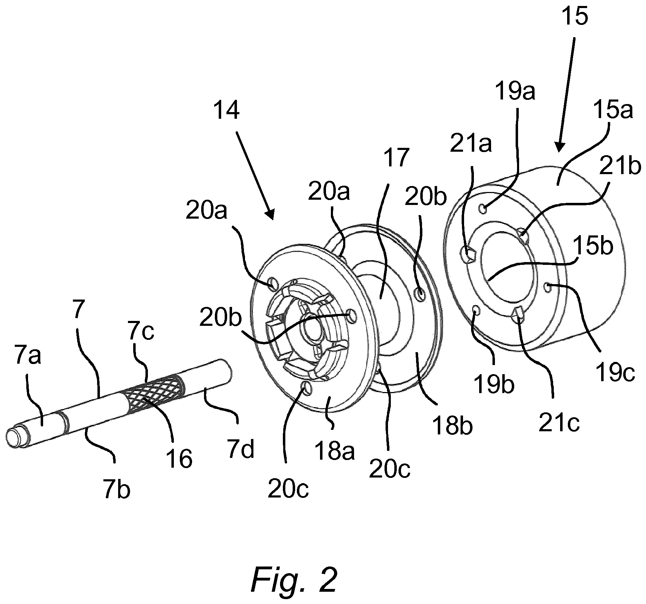

Dieser Permanentmagnet-Innenrotor ist in Fig. 2 in einer explodierten Darstellung näher gezeigt.

Die Motorwelle 7 weist ein vorderes Wellenende 7a auf, an dem das Pumpenrad 3 zu befestigen ist. In einem mittleren Abschnitt 7c weist die Motorwelle 7 an seiner Außenmantelwand eine Rändelung 16 auf, die ausgebildet ist, den Halter 14 drehfest auf der Motorwelle 7 zu fixieren. Lagerflächenabschnitte 7b, 7d bilden Sitze für die Wellenlager 11, 12 und ein Axiallager 27 welche ausgebildet sind, die Motorwelle 7 in dem Motorgehäuse 9 drehbar zu lagern.

Der Permanentmagnet-Ring 15 des Rotors 13 steht im Nassraum 22 in unmittelbarem Kontakt zur Flüssigkeit (Fig. 1). Der Rotor 13 weist einen einteiligen Permanentmagnet-Ring 15 aus einem anisotropen ferromagnetischen Material auf, der mehrpolig magnetisiert ist.

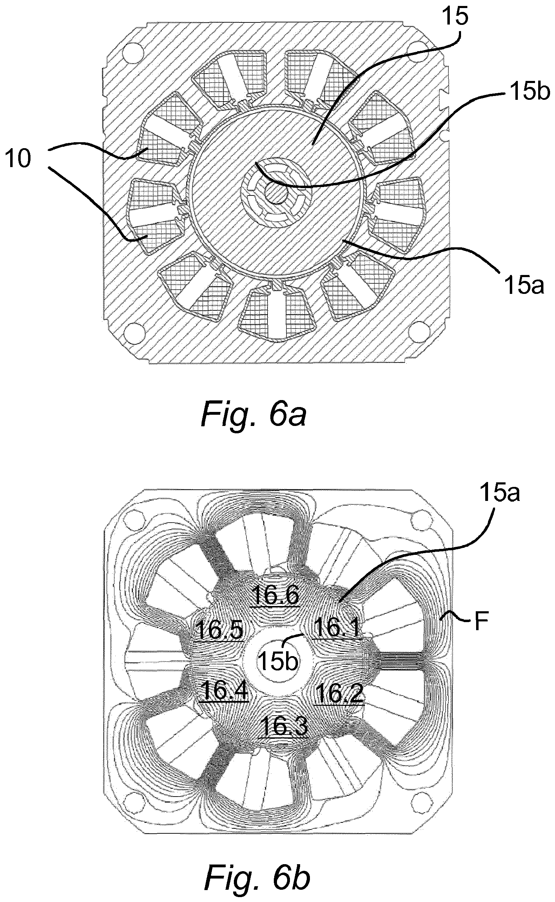

Der Permanentmagnet-Ring 15 ist derart mehrpolig magnetisiert, dass jedes Polpaar 16.1 bis 16.6, wie in Fig. 6a und 6b schematisch dargestellt, im Querschnitt des Permanentmagnet-Rings 15 einen Kreisringsektor einnimmt, derart dass die magnetischen Feldlinien F von einer äußeren Ringwand 15a des Permanentmagnet-Ringes 15 ausgehend sich radial nach innen erstrecken, innerhalb des jeweiligen Sektors nahe einer inneren Ringwand 15b des Permanentmagnet-Ringes 15 bogenförmig verlaufen und sich dann in Richtung der äußeren Ringwand 15a des Permanentmagnet-Ringes 15 wieder radial nach außen erstrecken, wie dies insbesondere in Fig. 6b dargestellt ist. Der Permanentmagnet-Ring 15 ist im gezeigten Ausführungsbeispiel mit sechs Polpaaren 16.1 bis 16.6 magnetisiert, die in gleichgroßen Sektoren gleichmäßig über den Umfang des Ringes verteilt angeordnet sind. Der Permanentmagnet-Ring 15 kann jedoch beispielsweise auch mit vier oder acht Polpaaren ausgeführt sein.

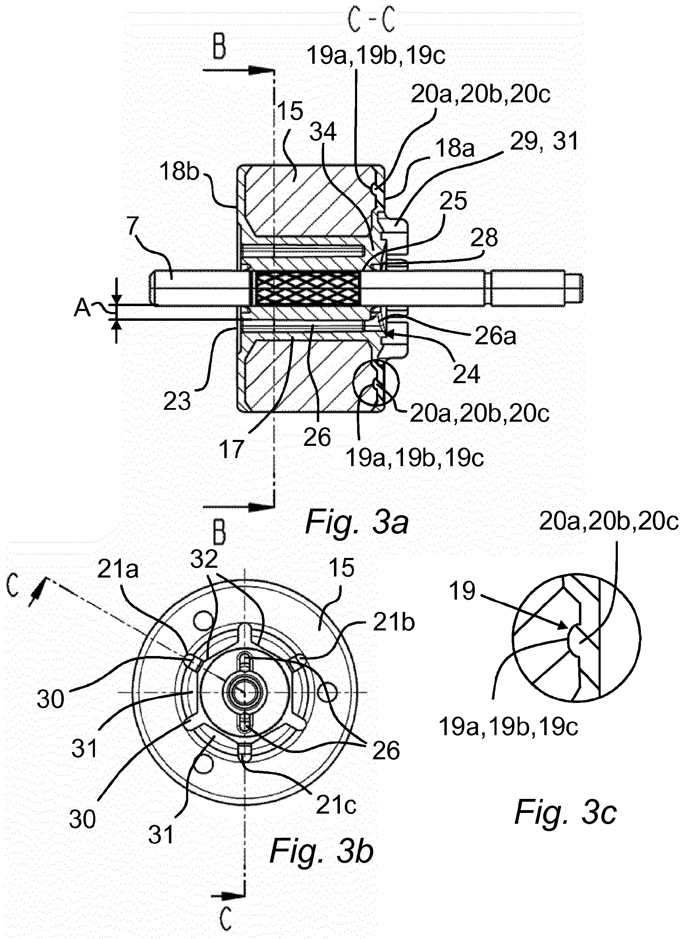

Wie insbesondere in der Fig. 2 und Fig. 3a dargestellt weist der Halter 14 zur Bildung einer trommelförmigen Aufnahme für den Permanentmagnet-Ring 15 einen kreisringzylindrischen Hülsenabschnitt 17 auf, der fest mit der Motorwelle 7 verbunden ist. An axial gegenüberliegenden Stirnseiten des Hülsenabschnitts 17 sind zwei Kreisscheiben 18a, 18b angeordnet, die jeweils einen größeren Außendurchmesser aufweisen, als der Hülsenabschnitt 17, so dass zwischen den Kreisscheiben 18a, 18b der Permanentmagnet-Ring 15 axial fixiert durch die Kreisscheiben 18a, 18b gehalten ist.

Der Permanentmagnet-Ring 15 weist im Falle des in den Fig. 3a bis 3c dargestellten Ausführungsbeispiels drei Verdrehsicherungen 19 in Form von Sicherungsrücksprüngen 19a, 19b, 19c auf, die ausgebildet sind, in korrespondierende Sicherungsvorsprünge 20a, 20b, 20c einzugreifen, die an wenigstens einem der beiden Kreisscheiben 18a, 18b des Halters 14 ausgebildet sind, um in einer ineinander greifenden Position den Permanentmagnet-Ring 15 drehfest an dem Halter 14 zu fixieren.

Jeder Sicherungsrücksprung 19a, 19b, 19c wird im dargestellten Ausführungsbeispiel von einer halblinsenförmigen Vertiefung in einer Ringstirnwand in dem Permanentmagnet-Ring 15 gebildet. Jeder Sicherungsvorsprung 20a, 20b, 20c wird dabei von einem korrespondierenden halblinsenförmigen Vorsprung an dem Halter 14 , insbesondere an einer dem Permanentmagnet-Ring 15 zugewandten Kreisscheibenwand der wenigstens einen Kreisscheibe 18a, 18b gebildet. Indem insbesondere der Permanentmagnet-Ring 15 mit derartigen halblinsenförmigen Vertiefungen versehen ist, können scharfe Kanten und/oder Ecken in der Oberfläche des Permanentmagnet-Rings 15 vermieden werden.

Ergänzend weist im Falle des dargestellten Ausführungsbeispiels der Permanentmagnet-Ring 15 drei Positionierkerben 21 a, 21 b, 21 c auf, die ausgebildet sind, den Permanentmagnet-Ring 15 während eines Magnetisiervorgangs in einer (nicht dargestellten) Magnetisiervorrichtung gegen Verdrehen gesichert zu halten.

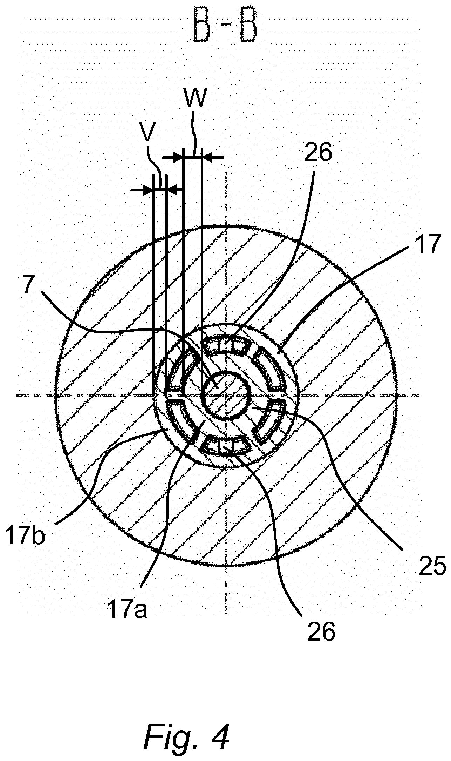

Im Falle des vorliegenden Ausführungsbeispiels weist der Hülsenabschnitt 17 zwei Strömungskanäle 26 auf. Die beiden Strömungskanäle 26 sind gegenüberliegend , d.h. um 180 Grad versetzt zueinander auf einem gemeinsamen Umfang angeordnet, wie dies insbesondere in der Fig. 3b und Fig. 4 dargestellt ist. Jeder Strömungskanal 26 ist ausgebildet, in dem Nassraum 22 befindliche Flüssigkeit von einem ersten Stirnende 23 des Halters 14 zu einem axial gegenüberliegenden zweiten Stirnende 24 des Halters 14 zu transportieren. Jeder Strömungskanal 26 erstreckt sich parallel zur axialen Länge der Motorwelle 7. Der Hülsenabschnitt 17 weist eine innere Mantelwand 25 auf, welche die Motorwelle 7 über ihren Umfang hinweg vollständig umschließend an der Motorwelle 7 anliegt, wie dies insbesondere auch in Fig. 4 zu sehen ist. Jeder Strömungskanal 26 erstreckt sich dabei in einem radialen Abstand A zur Motorwelle 7 vollständig im Inneren des Hülsenabschnitts 17. Jeder Strömungskanal 26 weist dabei eine umfänglich geschlossenwandige Kanalwand auf. Die geschlossenwandige Kanalwand wird vollständig aus dem Material des Hülsenabschnitts 17 des Halters 14 gebildet.

Im Falle des vorliegenden Ausführungsbeispiels der Erfindung ist die Wandstärke W einer innerhalb des Umfangs des wenigstens einen Strömungskanals 26 liegenden Hülsen-Innenwand 17a des Hülsenabschnitts 17, wie in Fig. 4 gezeigt, größer, als die Wandstärke V einer außerhalb des Umfangs des wenigstens einen Strömungskanals 26 liegenden Hülsen-Außenwand 17b des Hülsenabschnitts 17.

In der Fig. 3a ist rechtsseitig unterhalb der Motorwelle 7 dargestellt, dass der gezeigte Strömungskanal 26 austrittsseitig einen sich im Querschnitt erweiternden Strömungskanal-Endabschnitt 26a aufweist.

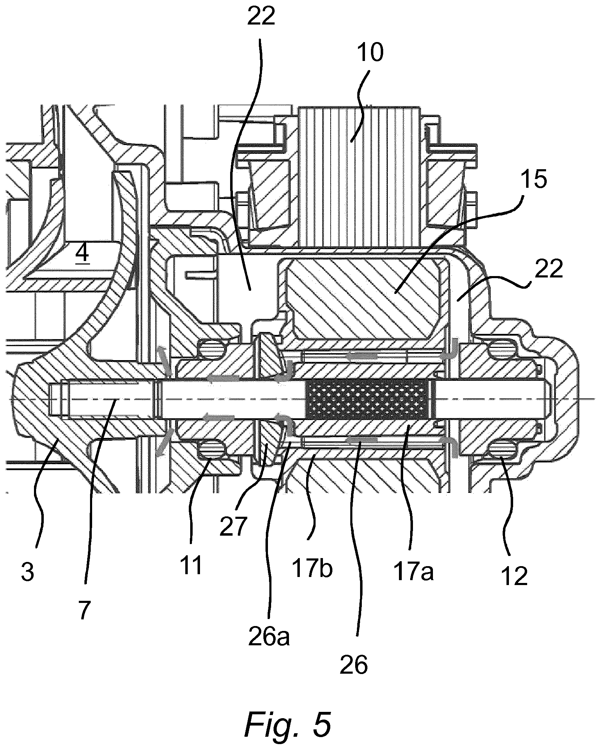

Die Strömungskanäle 26 münden insbesondere austrittsseitig (siehe Pfeile in Fig. 5) an einer Stirnwand 28 eines am Halter 14 ausgebildeten Lagersitzes 29, in dem das Axiallager 27 gehalten ist. Der Lagersitz 29 weist mehrere gleichmäßig über einen Umfang verteilte, zur Bildung von Strömungsdurchbrüchen 30 voneinander beabstandete Vorsprünge 31 auf, die sich von der Stirnwand 28 des Halters 14 in axialer Richtung weg erstrecken. Die Vorsprünge 31 weisen dem Axiallager 27 zugewandte Innenflächen 32 auf, die zum linienberührenden Anliegen an dem Axiallager 27 eben ausgebildet sind.

Der Hülsenabschnitt 17 weist mehrere, sich axial längserstreckende, gleichmäßig über einen Umfang verteilte sacklochartige Ausnehmungen 33 auf. Die Ausnehmungen 33 weisen im Querschnitt eine kreisringsegmentförmige Kontur auf. Jeder Strömungskanal 26 wird durch jeweils eine Ausnehmung 33 gebildet, deren die sacklochartige Ausnehmung 33 bildende geschlossen Stirnwand 34 eröffnet ausgebildet ist. Die geschlossen Stirnwand 34 ist insoweit durch den sich im Querschnitt erweiternden Strömungskanal-Endabschnitt 26a ersetzt.

### BEZUGSZEICHENLISTE

- 1: Pumpe
- 2: Pumpengehäuse
- 3: Pumpenrad
- 4: Schaufeln
- 5: Eintrittsöffnung
- 6: Austrittsöffnung
- 7: Motorwelle
- 7a: vorderes Wellenende
- 7b, 7d: Lagerflächenabschnitte
- 7c: mittlerer Abschnitt
- 8: Antriebsmotor
- 9: Motorgehäuse
- 10: Statorwicklung
- 11, 12: Lagern
- 13: Rotor
- 14: Halter
- 15: Rotormagnet
- 15a: äußere Ringwand
- 15b: innere Ringwand
- 16.1 bis 16.6: Polpaar
- 17: Hülsenabschnitt
- 17a: Hülsen-Innenwand
- 17b: Hülsen-Außenwand
- 18a, 18b: Kreisscheiben
- 19a,19b,19c: Vertiefungen
- 20a,20b,20c: Vorsprünge
- 21a,21b,21c: Positionierkerben
- 22: Nassraum
- 23: erstes Stirnende
- 24: zweites Stirnende
- 25: innere Mantelwand
- 26: Strömungskanal
- 27: Axiallager
- 28: Stirnwand
- 29: Lagersitz
- 30: Strömungsdurchbrüche
- 31: Vorsprünge
- 32: Innenflächen
- 33: sacklochartige Ausnehmungen
- 34: geschlossene Stirnwand
- F: Feldlinien
- A: radialer Abstand
- W: größere Wandstärke
- V: kleinere Wandstärke

## Patentansprüche

1. Haushaltsgerät, insbesondere Geschirrspülmaschine oder Waschmaschine, mit einer Pumpe (1), die einen Antriebsmotor (8) mit einer elektrisch ansteuerbaren Statorwicklung (10) und einem im Feld der Statorwicklung (10) in einem Nassraum (22) des Antriebsmotors (8) drehantreibbar gelagerten Rotor (13) aufweist, wobei der Rotor (13) eine Motorwelle (7), einen als Permanentmagnet-Ring ausgebildeten Rotormagneten (15) und einen Halter (14) aufweist, der als einstückiges Kunststoffspritzgussteil auf der Motorwelle (7) befestigt ist und an dem der Rotormagnet (15) gehalten ist, wobei der Halter (14) einen sich zwischen der Motorwelle (7) und dem Rotormagneten (15) erstreckenden Hülsenabschnitt (17) umfasst, der wenigstens einen Strömungskanal (26) aufweist, der ausgebildet ist, in dem Nassraum (22) befindliche Flüssigkeit durch den Halter (14) zu transportieren, wobei der Halter (14) vollumfänglich auf der Motorwelle (7) aufsitzt, wobei der wenigstens eine Strömungskanal (26) sich in einem radialen Abstand (A) zur Motorwelle (7) vollständig im Inneren des Hülsenabschnitts (17) erstreckt, wobei der wenigstens eine Strömungskanal (26) eine umfänglich geschlossenwandige Kanalwand aufweist, und wobei die geschlossenwandige Kanalwand vollständig aus dem Material des Hülsenabschnitts (17) des im Kunststoffspritzgussverfahren gefertigten Halters (14) gebildet wird.

2. Haushaltsgerät nach Anspruch 1, **dadurch gekennzeichnet, dass** die Wandstärke (W) einer innerhalb des Umfangs des wenigstens einen Strömungskanals (26) liegenden Hülsen-Innenwand (17a) des Hülsenabschnitts (17) größer ist, als die Wandstärke (V) einer außerhalb des Umfangs des wenigstens einen Strömungskanals (26) liegenden Hülsen-Außenwand (17b) des Hülsenabschnitts (17).

3. Haushaltsgerät nach einem der Ansprüche 1 oder 2, **dadurch gekennzeichnet, dass** der wenigstens eine Strömungskanal (26) zumindest austrittsseitig einen sich im Querschnitt erweiternden Strömungskanal-Endabschnitt (26a) aufweist.

4. Haushaltsgerät nach einem der Ansprüche 1 bis 3, **dadurch gekennzeichnet, dass** der wenigstens eine Strömungskanal (26) insbesondere austrittsseitig an einer Stirnwand (28) eines am Halter (14) ausgebildeten Lagersitzes (29) mündet, in dem ein Gleit- oder Wälzlager (11, 12), insbesondere ein Axiallager (27) gehalten ist, welches ausgebildet ist, den Rotor (13) bezüglich der Statorwicklung (10) drehbar zu lagern.

5. Haushaltsgerät nach Anspruch 4, **dadurch gekennzeichnet, dass** der Lagersitz (29) mehrere gleichmäßig über einen Umfang verteilte, zur Bildung von Strömungsdurchbrüchen (30) voneinander beabstandete Vorsprünge (31) aufweist, die sich von der Stirnwand (28) des Halters (14) in axialer Richtung weg erstrecken.

6. Haushaltsgerät nach Anspruch 5, **dadurch gekennzeichnet, dass** die Vorsprünge (31) dem Axiallager (27) zugewandte Innenflächen (32) aufweisen, die zum linienberührenden Anliegen an dem Axiallager (27) eben ausgebildet sind.

7. Haushaltsgerät nach einem der Ansprüche 1 bis 6, **dadurch gekennzeichnet, dass** der Hülsenabschnitt (17) mehrere, sich axial längserstreckende, gleichmäßig über einen Umfang verteilte sacklochartige Ausnehmungen (33) aufweist.

8. Haushaltsgerät nach Anspruch 7, **dadurch gekennzeichnet, dass** die Ausnehmungen (33) im Querschnitt eine kreisringsegmentförmige Kontur aufweisen.

9. Haushaltsgerät nach Anspruch 7 oder 8, **dadurch gekennzeichnet, dass** der wenigstens eine Strömungskanal (26), insbesondere zwei oder mehrere Strömungskanäle (26) durch jeweils eine Ausnehmung gebildet wird, deren die sacklochartige Ausnehmung (33) bildende geschlossen Stirnwand (34) eröffnet ausgebildet ist.

10. Haushaltsgerät nach einem der Ansprüche 1 bis 9, **dadurch gekennzeichnet, dass** der Rotor einen einteiligen Permanentmagnet-Ring (15) aus einem anisotropen ferromagnetischen Material aufweist, der mehrpolig, insbesondere mit vier, sechs oder acht Polen, magnetisiert ist.

11. Haushaltsgerät nach einem der Ansprüche 1 bis 10, **dadurch gekennzeichnet, dass** gegen ein Verdrehen des Permanentmagnet-Rings (15) um die Achse des Rotors (13) auf dem Halter (14) eine Verdrehsicherung vorgesehen ist, die von wenigstens einem formschlüssig in jeweils wenigstens einen Sicherungsrücksprung an dem Halter (14) eingreifenden Sicherungsvorsprung am Permanentmagnet-Ring (15), und/oder die von wenigstens einem formschlüssig in jeweils wenigstens einen Sicherungsrücksprung (19a, 19b, 19c) am Permanentmagnet-Ring (15) eingreifenden Sicherungsvorsprung (20a, 20b, 20c) an dem Halter (14) gebildet ist.

12. Haushaltsgerät nach Anspruch 11, **dadurch gekennzeichnet, dass** der Halter (15) einen kreisringzylinderförmigen Hülsenabschnitt (17), der fest mit der Motorwelle (7) verbunden ist, und an axial gegenüberliegenden Stirnseiten des kreiszylinderförmigen Hülsenabschnitts zwei den Permanentmagnet-Ring (15) seitlich begrenzende Kreisscheiben (18a, 18b) aufweist, von denen wenigstens eine Kreisscheibe eine dem Permanentmagnet-Ring (15) zugewandte Kreisscheibenwand aufweist, welche den wenigstens einen Sicherungsrücksprung und/oder den wenigstens einen Sicherungsvorsprung aufweist.

## Claims

1. Household appliance, in particular dishwasher or washing machine, having a pump (1) which has a drive motor (8) with a stator winding (10) that can be electrically actuated and a rotor (13) mounted in a rotationally drivable manner in the field of the stator winding (10) in a wet chamber (22) of the drive motor (8), wherein the rotor (13) has a motor shaft (7), a rotor magnet (15) embodied as a permanent magnet ring and a holder (14) which is fastened to the motor shaft (7) as a one-piece plastic injection moulded part and is held on the rotor magnet (15), wherein the holder (14) comprises a sleeve section (17) which extends between the motor shaft (7) and the rotor magnet (15) and has at least one flow channel (26) which is designed to transport liquid in the wet chamber (22) through the holder (14), wherein the holder (14) rests to its full extent on the motor shaft (7), wherein the at least one flow channel (26) extends entirely in the interior of the sleeve section (17) at a radial distance (A) to the motor shaft (7), wherein the at least one flow channel (26) has a circumferentially closed-wall channel wall, and wherein the closed-wall channel wall is formed entirely from the material of the sleeve section (17) of the holder (14) manufactured in the plastic injection moulding procedure.

2. Household appliance according to claim 1, **characterised in that** the wall thickness (W) of a sleeve inner wall (17a) of the sleeve section (17) lying within the circumference of the at least one flow channel (26) is greater than the wall thickness (V) of a sleeve outer wall (17b) of the sleeve section (17) lying outside the circumference of the at least one flow channel (26).

3. Household appliance according to one of claims 1 or 2, **characterised in that** the at least one flow channel (26) has, at least on the outlet side, a flow channel end section (26a) which broadens in cross-section.

4. Household appliance according to one of claims 1 to 3, **characterised in that** the at least one flow channel (26) opens, in particular on the outlet side, at an end wall (28) of a bearing seat (29) formed on the holder (14), in which bearing seat (29) a journal bearing or rolling bearing (11, 12), in particular an axial bearing (27), is held, which is designed to mount the rotor (13) so as to rotate relative to the stator winding (10).

5. Household appliance according to claim 4, **characterised in that** the bearing seat (29) has a plurality of projections (31) distributed evenly across a circumference and spaced apart from one another to form flow through-holes (30), and which extend away from the end wall (28) of the holder (14) in an axial direction.

6. Household appliance according to claim 5, **characterised in that** the projections (31) have inner surfaces (32) facing the axial bearing (27) which are designed to be level to abut the axial bearing (27) in a line-contact manner.

7. Household appliance according to one of claims 1 to 6, **characterised in that** the sleeve section (17) has a plurality of axially longitudinally extending blind-hole recesses (33) distributed evenly over a circumference.

8. Household appliance according to claim 7, **characterised in that** the recesses (33) have a contour in the shape of a circular ring segment in cross-section.

9. Household appliance according to claim 7 or 8, **characterised in that** the at least one flow channel (26), in particular two or more flow channels (26), are formed by a recess in each case, the closed end wall (34) of which forming the blind-hole recess (33) is designed to be open.

10. Household appliance according to one of claims 1 to 9, **characterised in that** the rotor has a one-piece permanent magnet ring (15) made of an anisotropic ferromagnetic material with multi-polar magnetisation, in particular with four, six or eight poles.

11. Household appliance according to one of claims 1 to 10, **characterised in that** an anti-twist device is provided on the holder (14) to prevent twisting of the permanent magnet ring (15) about the axis of the rotor (13), and is formed by at least one securing projection on the permanent magnet ring (15) engaging positively in each case in at least one securing recess on the holder (14), and/or is formed by at least one securing projection (20a, 20b, 20c) on the holder (14) engaging positively in each case in at least one securing recess (19a, 19b, 19c) on the permanent magnet ring (15).

12. Household appliance according to claim 11, **characterised in that** the holder (15) has a circularly cylindrical sleeve section (17) which is permanently connected to the motor shaft (7), and two circular disks (18a, 18b) laterally delimiting the permanent magnet ring (15) at axially opposite end faces of the circularly cylindrical sleeve section, of which at least one circular disk has a circular disk wall which faces the permanent magnet ring (15) and has the at least one securing recess and/or the at least one securing projection.

## Revendications

1. Appareil ménager, notamment lave-vaisselle ou lave-linge, comprenant une pompe (1) qui présente un moteur d'entraînement (8) muni d'un enroulement de stator (10) commandable électriquement et d'un rotor (13) logé de manière à pouvoir être entraîné par rotation dans le champ de l'enroulement de stator (10) dans une chambre humide (22) du moteur d'entraînement (8), le rotor (13) présentant un arbre moteur (7), un aimant de rotor (15) réalisé comme anneau à aimant permanent et un support (14) qui est fixé sur l'arbre moteur (7) en tant que pièce en matière plastique moulée par injection et sur lequel est maintenu l'aimant de rotor (15), le support (14) comprenant une section de douille (17) s'étendant entre l'arbre moteur (7) et l'aimant de rotor (15), laquelle présente au moins un canal d'écoulement (26) qui est réalisé pour transporter le liquide présent dans la chambre humide (22) à travers le support (14), le support (14) reposant sur toute la circonférence de l'arbre moteur (7), l'au moins un canal d'écoulement (26) s'étendant complètement à l'intérieur de la section de douille (17) avec un écart radial (A) par rapport à l'arbre moteur (7), l'au moins un canal d'écoulement (26) présentant une paroi de canal à paroi fermée sur le pourtour, et la paroi de canal à paroi fermée étant entièrement formée à partir de la matière de la section de douille (17) du support (14) fabriqué selon le procédé de moulage par injection de matière plastique.

2. Appareil ménager selon la revendication 1, **caractérisé en ce que** l'épaisseur de paroi (W) d'une paroi intérieure (17a) de douille, située à l'intérieur de la circonférence de l'au moins un canal d'écoulement (26), de la section de douille (17) est plus grande que l'épaisseur de paroi (V) d'une paroi extérieure (17b) de douille, située à l'extérieur de la circonférence de l'au moins un canal d'écoulement (26), de la section de douille (17).

3. Appareil ménager selon l'une quelconque des revendications 1 ou 2, **caractérisé en ce que** l'au moins un canal d'écoulement (26) présente au moins côté sortie une section terminale (26a) de canal d'écoulement s'élargissant en section transversale.

4. Appareil ménager selon l'une quelconque des revendications 1 à 3, **caractérisé en ce que** l'au moins un canal d'écoulement (26) aboutit, notamment côté sortie, sur une paroi frontale (28) d'un siège de palier (29) réalisé sur le support (14), dans lequel est maintenu un palier lisse ou un palier à roulement (11, 12), notamment un palier axial (27), lequel est réalisé pour loger le rotor (13) de manière rotative par rapport à l'enroulement de stator (10).

5. Appareil ménager selon la revendication 4, **caractérisé en ce que** le siège de palier (29) présente plusieurs saillies (31) distancées les unes des autres, réparties régulièrement sur une circonférence pour la formation de passages d'écoulement (30), lesquelles s'étendent en direction axiale en s'éloignant de la paroi frontale (28) du support (14).

6. Appareil ménager selon la revendication 5, **caractérisé en ce que** les saillies (31) présentent des surfaces intérieures (32) tournées vers le palier axial (27), lesquelles surfaces intérieures sont réalisées de manière plane pour l'application sur le palier axial (27) en touchant la ligne.

7. Appareil ménager selon l'une quelconque des revendications 1 à 6, **caractérisé en ce que** la section de douille (17) présente plusieurs évidements (33) en forme de trou borgne s'étendant axialement en longueur, répartis de manière régulière sur une circonférence.

8. Appareil ménager selon la revendication 7, **caractérisé en ce que** les évidements (33) présentent un contour en forme de segment d'anneau de cercle en section transversale.

9. Appareil ménager selon la revendication 7 ou 8, **caractérisé en ce que** l'au moins un canal d'écoulement (26), notamment **en ce que** deux ou plusieurs canaux d'écoulement (26) sont respectivement formés par un évidement, dont la paroi frontale (34) fermée formant l'évidement (33) en forme de trou borgne est réalisée de manière ouverte.

10. Appareil ménager selon l'une quelconque des revendications 1 à 9, **caractérisé en ce que** le rotor présente un anneau à aimant permanent (15) d'une seule pièce constitué d'une matière ferromagnétique anisotrope, lequel est magnétisé de manière pluripolaire, notamment avec quatre, six ou huit pôles.

11. Appareil ménager selon l'une quelconque des revendications 1 à 10, **caractérisé en ce qu'**un dispositif anti-rotation est ménagé pour éviter une rotation de l'anneau à aimant permanent (15) autour de l'axe du rotor (13) sur le support (14), lequel dispositif anti-rotation est formé par au moins une saillie de sécurité sur l'anneau à aimant permanent (15), ayant prise par adhérence de forme dans respectivement au moins un retrait de sécurité sur le support (14), et/ou par au moins une saillie de sécurité (20a, 20b, 20c) sur le support (14), ayant prise par adhérence de forme dans respectivement au moins un retrait de sécurité (19a, 19b, 19c) sur l'anneau à aimant permanent (15).

12. Appareil ménager selon la revendication 11, **caractérisé en ce que** le support (15) présente une section de douille (17) en forme de cylindre à anneau circulaire, qui est reliée de manière fixe à l'arbre moteur (7), et, sur des côtés frontaux axialement opposés de la section de douille en forme de cylindre à anneau circulaire, deux disques circulaire (18a, 18b) délimitant latéralement l'anneau à aimant permanent (15), dont au moins un disque circulaire présente une paroi de disque circulaire tournée vers l'anneau à aimant permanent (15), laquelle paroi présente l'au moins un retrait de sécurité et/ou l'au moins une saillie de sécurité.
